# FASCICULE DE BREVET EUROPEEN

(11) **EP 0 313 631 B1**
(45) Date de publication et mention de la délivrance du brevet: **20.10.1993**
(21) Numéro de dépôt: 88904547.2
(22) Date de dépôt: 11.05.1988
(51) Int. Cl.: G07C 1/30, G07B 15/02, G07F 7/08

(54) **SYSTEME DE COMPTABILISATION DU TEMPS, NOTAMMENT POUR LE STATIONNEMENT PAYANT**
VORRICHTUNG ZUM VERWALTEN VON ZEITEINHEITEN, INSBESONDERE BEIM GEBÜHRENPFLICHTIGEN PARKEN
TIME KEEPING SYSTEM, PARTICULARLY FOR PARKING METER

(30) Priorité: 14.05.1987 FR 8706776
(43) Date de publication de la demande: 03.05.1989
(73) Titulaire: INNOVATRON INDUSTRIES, Société Anonyme, F-75002 Paris (FR)
(72) Inventeur: GRIEU, François, F-75011 Paris (FR); LEVY, Frédéric, F-75010 Paris (FR)
(74) Mandataire: Dupuis-Latour, Dominique
(86) Numéro de dépôt international: FR8800232
(87) Numéro de publication internationale: WO8809022

(56) Documents cités:
- EP-A- 0 034 570
- EP-A- 0 142 013
- EP-A- 0 165 165
- EP-A- 0 173 813
- DE-A- 3 143 047
- DE-A- 3 514 620
- DE-A- 3 543 067
- FR-A- 2 503 423
- FR-A- 2 547 083
- FR-A- 2 594 985
- GB-A- 2 158 628
- US-A- 4 231 458

## Description

La présente invention concerne un système de comptabilisation du temps.

Elle s'applique en particulier à la comptabilisation des durées de stationnement payant.

Cette application n'est cependant pas limitative, et l'invention peut être appliquée de façon générale chaque fois qu'il y a lieu de comptabiliser un temps par consommation progressive, au fur et à mesure de l'écoulement du temps, d'un crédit d'unités de durée préalablement alloué à un usager.

Les procédés de comptabilisation du stationnement payant actuellement utilisés reposent principalement sur l'utilisation de bornes individuelles (parcmètres) ou collectives (horodateurs) actionnées par l'usager au moyen de pièces de monnaie, ou encore, dans les parcs de stationnement fermés, au moyen de tickets magnétiques enregistrant l'heure d'arrivée et libérant l'ouverture d'une barrière après acquittement d'une somme donnée par un appareil monnayeur automatique, ou auprès d'un caissier.

Il a également été proposé (voir notamment le GB-A-2 158 628) de remplacer les pièces de monnaie par des tickets électroniques prépayés et les horodateurs ou autres dispositifs monnayeurs par des boîtiers individuels mis à la disposition des usagers, que ceux-ci placent derrière leur pare-brise et qui débitent automatiquement le ticket prépayé du montant correspondant au temps réel de stationnement, en affichant en outre des informations destinées aussi bien à l'usager (solde subsistant dans le ticket, heure limite de stationnement possible) qu'au personnel de surveillance (dépassement de la durée autorisée de stationnement).

Un tel "ticket électronique" peut notamment comprendre une mémoire électronique où chaque position mémoire peut être inscrite individuellement et irréversiblement, chacune des positions mémoire représentant un crédit d'unités de durée consommées les unes après les autres par inscription successive des positions mémoire correspondantes. A la différence des tickets magnétiques, la mémoire (qui peut notamment se présenter sous forme d'une carte où elle est incorporée) n'est donc pas rechargeable, ce qui limite considérablement les risques de fraude.

Un tel système présente l'avantage de libérer l'usager de la contrainte de devoir disposer de pièces de monnaie et, à supposer qu'il en dispose, de faire l'appoint exact ; en outre, il ne paye que la durée réelle de stationnement et non une somme supérieure correspondant à une durée maximale estimée à l'avance.

Il se heurte cependant, si on souhaite le mettre effectivement en pratique, au problème de l'utilisation des cartes déjà entamées et ne contenant plus qu'un faible solde résiduel d'unités de durée de stationnement.

En effet, si ce solde résiduel (ou "reliquat") est très faible, l'usager n'aura d'autre recours que d'en abandonner le crédit correspondant, de sorte que la carte lui aura en fait coûté plus cher que l'usage qu'il en a réellement fait (à moins de prévoir une procédure de restitution et de remboursement de ces cartes par l'autorité qui les a délivrées, procédure évidemment lourde à gérer et difficile à faire accepter par le public).

Si au contraire ce solde, bien que faible, correspond néammoins à une valeur utilisable, l'usager risque ne pas l'utiliser tout de suite car, comme il connaît rarement la durée exacte du stationnement qu'il envisage, par sécurité il surévalue celle-ci et préfère introduire une carte non entamée ou peu entamée.

Ces difficultés font en sorte que l'usager va se trouver finalement avec un nombre important de cartes entamées, ce qui rend le système peu pratique.

On notera que cet inconvénient s'accentue d'autant plus que l'on prévoit des cartes de valeur nominale modérée, qui seront donc vite consommées, alors qu'il est précisément souhaitable de pouvoir proposer des cartes de valeur nominale modérée pour permettre une bonne acceptation du système par le public.

On connaît déjà par le document de brevet DE-A-3 514 620 un système pour appareil téléphonique fontionnant avec une carte à mémoire sur laquelle sont stockées des unités consommables, ledit système assurant le chargement des dernières unités d'une carte juste avant que celle-ci ne soit épuisée et permettant à l'utilisateur de changer de carte. Toutefois, ce document ne fournit pas d'information sur le sort des unités transférées et non consommées au moment où l'usager raccroche le combine.

L'un des buts de la présente invention est d'éliminer complètement ces difficultés, en résolvant le problème de l'utilisation des reliquats des cartes.

Cet objectif, ainsi que d'autres qui apparaitront par la suite, sont atteints à l'aide d'un système selon la revendication 1.

A cet effet, selon l'invention, il est prévu dans le boîtier des moyens de mémorisation temporaire d'un crédit d'unités de durée, activables au cas où le crédit de durée subsistant dans la carte introduite dans le boîtier est inférieur à la durée de stationnement par l'usager.

L'invention propose notamment de prévoir à cet effet dans le boîtier un accumulateur d'unités de durée, que l'usager viendra charger par le reliquat d'une ou de plusieurs cartes déjà entamées qu'il pourra ainsi éventuellement introduire une autre carte, qui ne commencera à être consommée qu'après que l'accumulateur aura été complètement déchargé.

Le chargement de l'accumulateur pourra être réalisé sur commande de l'usager (en appuyant sur un bouton prévu à cet effet, par exemple) et/ou automatiquement par le boîtier, par exemple si celui-ci détecte que le solde de la carte introduite est inférieur à un seuil donné.

En variante ou en complément de l'accumulateur, on peut prévoir que le boîtier puisse fonctionner "à découvert", c'est à dire qu'il continue à fonctionner normalement même après que la totalité du crédit d'unités de durée de la carte introduite ait été épuisé, et ne délivre un signal d'alerte qu'après dépassement d'une valeur maximale de découvert autorisée.

Bien entendu, lors de l'introduction ultérieure d'une nouvelle carte, celle-ci devra être débitée (automatiquement ou sur commande de l'usager) de la valeur du découvert atteint, les moyens de comptabilisation du découvert étant simultanément remis à zéro.

En variante ou en complément de l'accumulateur, on peut également prévoir que le boîtier puisse fonctionner avec un "crédit permanent" ou "tampon d'unités de durée", c'est à dire que, au cours du fonctionnement, ce sont d'abord les unités de durée du tampon qui sont consommées, celui-ci pouvant être reconstitué, indépendamment de sa consommation, par introduction d'une carte et commande (automatique ou par l'usager) de rechargement du tampon.

Selon un autre aspect de la présente invention, on généralise le système, par exemple à plusieurs municipalités, en permettant à l'usager d'utiliser dans n'importe quelle municipalité une carte unique, achetée aussi bien sur place que dans une autre municipalité.

A cet effet, on prévoit un système de compensation permettant de répartir les sommes provenant de la vente des cartes entre les différentes municipalités en fonction de l'utilisation réelle des cartes vendues, par exemple en fonction du nombre total d'heures stationnées dans chaque municipalité.

Pour cela, le boîtier comprend notamment une mémoire de compte où l'on mémorise au fur et à mesure des utilisations successives des informations (code représentatif du lieu d'utilisation et nombre associé de positions mémoire inscrites) permettant d'imputer ultérieurement les unités de durée consommées à un bénéficiaire déterminé lié au lieu où ces unités ont été consommées. Le boîtier comprend également des moyens de blocage permettant d'interdire toute utilisation du boîtier par son détenteur une fois un certain dépassement (durée, consommation,...) réalisé, et obliger ainsi ce détenteur à demander périodiquement une restauration de son boîtier, en contrepartie d'un transfert à un dispositif externe des informations de comptabilisation contenues dans celui-ci.

Le système comprend alors, outre les cartes et les boîtiers individuels, au moins un dispositif de transfert recevant les boîtiers et transférant les informations de compte des boîtiers vers ce dispositif de transfert, de manière à permettre ultérieurement la détermination pour chaque bénéficiaire d'une quote-part proportionnelle au nombre d'unités de durée consommées et la redistribution à chacun d'une fraction du produit des ventes des cartes fonction de cette quote-part.

On peut prévoir que la mémoire de compte du boîtier soit séparable de celui-ci, pour faciliter le transfert des informations qu'elle contient.

On peut également prévoir que les moyens de couplage auxiliaire de la carte (pour la lecture de la mémoire de compte et la restauration du fonctionnement du boîtier) soient confondus avec les moyens de couplage principal (pour l'introduction d'une carte dans le boîtier et la consommation progressive de celle-ci).

On va maintenant décrire en détail un mode de réalisation de l'invention, en référence aux dessins annexés, sur lesquels :
- les figures 1 et 2 sont des vues d'ensemble de la carte et du boîtier, respectivement avant et après introduction de la carte dans le boîtier,
- la figure 3 est un schéma par blocs de l'ensemble carte-boîtier montrant les différents circuits constitutifs de ceux-ci,
- la figure 4 est un schéma par blocs d'un dispositif de transfert utilisable dans le second mode de réalisation de la présente invention.

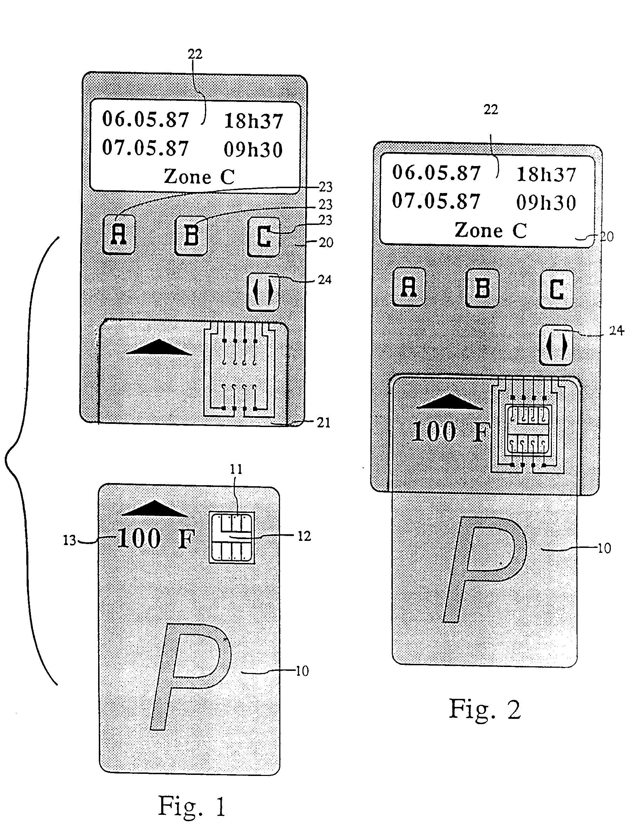

Sur la figure 1, la référence 10 désigne une carte du type carte à microcircuit, comprenant un circuit électronique pourvu d'une pluralité de contacts 11 reliés à une mémoire 12 du type PROM, cette mémoire comprenant une pluralité de positions inscrites successivement et de manière irréversible.

La puce utilisée peut être par exemple du type ET 1001 produite par EUROTECHNIQUE.

La carte contient également une indication 13 de la valeur monétaire correspondant au nombre de positions mémoire, par exemple 100 Francs pour 100 positions mémoire correspondant chacune à 1,00 Franc, ou 200 positions mémoire correspondant chacune à 0,50 Franc, etc.

Le boîtier 20 comprend un réceptacle 21 recevant une carte 10, un écran de visualisation 22, ainsi qu'un certain nombre de touches 23, 24.

De préférence, le réceptacle 21 est en matière transparente, de manière à laisser paraître de l'extérieur l'intégralité de la surface de la carte, en particulier la puce mémoire, même lorsque la carte est introduite dans le boîtier.

Dans un premier mode de réalisation, illustré figures 1 et 2, le boîtier comprend des touches 23 permettant de fixer un tarif de stationnement (tarif A, B ou C) et une touche 24 de changement de carte dont la fonction sera expliquée plus loin.

L'affichage 22 donne le jour et l'heure actuels, le jour et l'heure limite de stationnement autorisé, et le tarif A, B ou C correspondant à celui des boutons 23 sur lequel a préalablement appuyé l'usager.

L'heure limite de stationnement affichée correspond à la durée maximale de stationnement autorisée (par exemple 2 heures), éventuellement en fonction du tarif A, B ou C et en tenant compte des périodes de stationnement gratuit (heures de nuit, dimanches et jours fériés).

Toutefois, après introduction de la carte, si le crédit d'unités de durée subsistant dans celle-ci était inférieur à la durée réglementaire autorisée, l'heure limite possible compte tenu du crédit subsistant dans la carte se substituerait alors à l'heure limite autorisée, avec une indication (clignotement ou affichage d'un indicateur) avertissant l'usager que la carte qu'il vient d'introduire ne lui permet pas de couvrir complétement la durée maximale de stationnement autorisée.

Si tel est le cas, l'usager a alors la possibilité d'appuyer sur le bouton 24 de changement de carte qui va "vider" le solde d'unités de durée subsistant dans celle-ci dans une mémoire du boîtier formant accumulateur ; après quoi, l'usager pourra retirer la carte ainsi épuisée pour lui substituer une nouvelle carte qui viendra éventuellement prendre le relais de l'accumulateur s'il est nécessaire de prolonger la durée de stationnement jusqu'à la limite autorisée.

Cette caractéristique permet ainsi à un usager d'utiliser complètement les cartes de stationnement, même s'il ne reste dans celles-ci qu'un très faible solde, sans avoir besoin de retourner à son véhicule plus tard pour remplacer la carte épuisée par une carte chargée.

Le solde de la carte peut aussi être chargé automatiquement dans l'accumulateur dès que le boîtier détecte que le reliquat est en-dessous d'un seuil donné.

En variante ou en complément de cet accumulateur, pour que l'usager ait la possibilité de stationner au-delà du crédit d'unités de durée correspondant à la carte introduite dans le boîtier, ce dernier peut comprendre des moyens de comptage d'un solde débiteur d'unités de durée, des moyens pour déterminer périodiquement s'il subsiste dans la carte une position mémoire non inscrite et, dans l'affirmative, inscrire cette position mémoire ou, dans la négative, incrémenter les moyens de comptage, et des moyens pour détecter et signaler le franchissement par les moyens de comptage d'une valeur limite correspondant à un débit maximal autorisé d'unités de durée après consommation complète de la carte introduite dans le boîtier.

Il est en outre alors prévu des moyens pour remettre à zéro les moyens de comptage par introduction d'une nouvelle carte dans le boîtier, avec inscription concomitante d'un nombre de positions mémoire de cette nouvelle carte correspondant à la valeur de compte atteinte par les moyens de comptage.

Également en variante ou en complément de l'accumulateur, le boîtier peut comprendre, de façon comparable, des moyens de comptage réversible, formant tampon d'unités de durée, des moyens pour décrémenter périodiquement ce compteur sous contrôle du circuit d'horloge au fur et à mesure de l'écoulement du temps, des moyens pour déterminer, à chacune de ces décrémentations, s'il subsiste dans la carte une position mémoire non inscrite et, dans l'affirmative, inscrire cette position mémoire et incrémenter à nouveau le compteur de façon concomitante, et des moyens pour détecter et signaler le franchissement, dans le sens de la décrémentation, d'une valeur limite correspondant à un débit maximal autorisé d'unités de durée après consommation complète de la carte introduite dans le boîtier.

Le système comprend alors des moyens pour reconstituer le crédit consommé, c'est à dire pour restaurer à leur valeur de compte originelle les moyens de comptage par introduction d'une nouvelle carte dans le boîtier et pour inscrire, de façon concomitante, un nombre de positions mémoire de cette nouvelle carte correspondant à la différence entre la valeur de compte originelle et la valeur de compte atteinte, dans le sens de la décrémentation, par les moyens de comptage.

Par ailleurs, il est possible de prévoir en outre sur le boîtier un clavier numérique ou alphanumérique permettant à l'usager de composer un numéro de code (soit un code lié au véhicule - par exemple le numéro d'immatriculation -, soit un code personnel à l'usager), ce code étant ensuite comparé à un code mémorisé, le fonctionnement du système n'étant autorisé qu'en cas de concordance des deux codes.

Les moyens de comparaison peuvent être aussi bien situés dans le boîtier que dans la carte ; dans ce dernier cas, cette configuration a l'avantage de procurer une sécurité renforcée, du fait de l'impossibilité absolue de lire le code hors de la carte, en contrepartie d'une complexité plus grande pour le microcircuit.

Une telle vérification préalable d'un code permet d'accroître la sécurité du système, notamment si l'on souhaite utiliser des cartes de valeur importante. En effet, même si la carte (qui doit nécessairement rester, avec le boîtier, dans le véhicule pendant toute la durée de stationnement) est volée, le voleur ne pourra pas l'utiliser, soit parce qu'il ne pourra pas connaître le code contenu dans la carte, soit parce que il ne pourra pas utiliser sur un autre véhicule le code lié à celui-ci, qui apparaîtra sur l'afficheur du boîtier.

D'autre part, pour éviter les fraudes par des usagers simulant une panne de leur boîtier ou provoquant délibérement un endommagement de celui-ci, il est prévu :
- une indication sur l'affichage qui permet de rappeler en temps utile à l'usager qu'il doit remplacer la pile de son boîtier en voie d'épuisement ; s'il omet de le faire, son appareil finira par tomber en panne et sera traité comme tel (verbalisation pour stationnement illicite), et
- un dispositif d'autotest qui, en cas de panne autre que celle due à la défaillance des piles, affiche sur l'écran un signal "en panne" dans ce cas, l'usager bénéficiera d'une franchise donnée (par exemple, 12 heures) pendant laquelle le signal sera maintenu sur l'affichage et aucune sanction ne lui sera appliquée. Au terme de cette période, s'il n'a pas entretemps échangé son appareil défectueux contre un autre en état de marche, le signal "en panne" cessera d'être affiché et, s'il stationne dans ces conditions, sera passible d'une amende.

Dans le second mode de réalisation indiqué plus haut, c'est à dire celui dans lequel il est prévu des moyens pour déterminer, pour chaque municipalité, le nombre d'unités de durée consommées de manière à redistribuer à chacune une fraction du produit des ventes des cartes (fonction d'une quote-part proportionnelle à cette durée), le boîtier 20 comprend en outre un clavier permettant à l'usager d'introduire un code correspondant au lieu dans lequel il stationne, par exemple le code postal de la municipalité ; ce code sera affiché sur l'écran en même temps que les informations de jour et d'heure et les informations de tarif.

Par ailleurs, toujours dans le cas de ce second mode de réalisation, le boîtier comprend en outre :
- des moyens d'introduction par l'usager, après mise en place de la carte dans le boîtier, d'un paramètre représentatif du lieu d'utilisation du crédit d'unités de durée,
- une mémoire de compte, coopérant avec le circuit d'écriture et les moyens d'introduction, pour enregistrer à chaque retrait de la carte une information de comptabilisation comprenant le code du paramètre représentatif du lieu d'utilisation et le nombre associé de positions mémoire inscrites entre l'instant de la mise en place de la carte dans le boîtier et celui du retrait de celle-ci hors du boîtier, de sorte que le boîtier puisse mémoriser, au fur et à mesure des utilisations successives, des informations permettant d'imputer ultérieurement les unités de durée consommées à un bénéficiaire déterminé lié au lieu où ces unités ont été consommées,
- des moyens de comptage, propres à incrémenter l'état d'au moins un compteur d'utilisations au fur et à mesure des utilisations successives du système, incrémentation(s) pouvant notamment être opérée(s) en fonction du nombre de positions mémoire inscrites dans les cartes successives introduites dans le boîtier, et/ou du nombre de cartes successives introduites dans le boîtier, et/ou du laps de temps écoulé depuis l'introduction de la première carte dans le boîtier,
- des moyens de blocage des circuits internes du boîtier, activés en réponse au dépassement d'une valeur de consigne prédéterminée par au moins l'un desdits compteurs d'utilisations, de manière à rendre impossible toute utilisation du boîtier par son détenteur une fois ce dépassement réalisé, et obliger ainsi ce détenteur à demander périodiquement une restauration de son boîtier, en contrepartie d'un transfert à un dispositif externe des informations de comptabilisation contenues dans celui-ci,
- des moyens de visualisation de l'état, activé ou non, de ces moyens de blocage,
- des moyens auxiliaires de couplage, accessibles de l'extérieur du boîtier, à ces moyens de mémorisation,
Pour collecter et centraliser les informations accumulées dans les mémoires de compte des différentes cartes, le système comprend, outre les cartes et les boîtiers individuels au moins un dispositif de transfert recevant les boîtiers et comprenant :
- des moyens de couplage, propres à coopérer avec les moyens auxiliaires de couplage du boîtier de manière à permettre l'établissement d'une liaison entre les circuits internes du dispositif de transfert et la mémoire de compte du boîtier,
- des moyens de lecture du contenu de la mémoire de compte du boîtier,
- une mémoire de compte recevant de façon cumulative les contenus des mémoires de compte des différents boîtiers introduits successivement dans le dispositif de transfert,
- des moyens de remise à zéro de la mémoire de compte du boîtier après lecture et transfert de ses informations dans la mémoire du dispositif de transfert, de manière à transférer les informations de compte d'une pluralité de boîtiers dans le dispositif de transfert et permettre ultérieurement la détermination pour chaque bénéficiaire d'une quote-part proportionnelle au nombre d'unités de durée consommées et la redistribution à chacun d'une fraction du produit des ventes des cartes fonction de cette quote-part, et
- des moyens de libération des moyens de blocage du boîtier et de remise à zéro du(des) compteur(s) d'utilisations du boîtier, activés après lecture et transfert des informations de la mémoire de compte du boîtier dans la mémoire du dispositif de transfert, de manière à restaurer le fonctionnement du boîtier une fois que son détenteur en aura transféré les informations de la mémoire de compte dans la mémoire d'un dispositif de transfert.

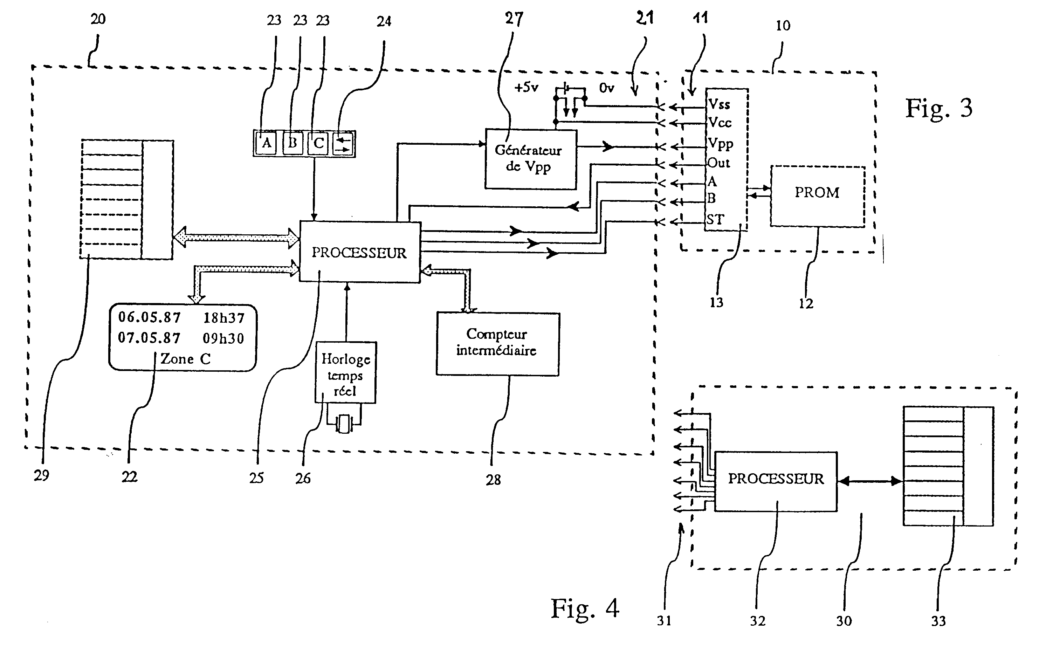

La figure 3 est une représentation schématique des circuits internes de la carte et du boîtier.

La carte comprend, outre la mémoire PROM 12 et les connexions de sortie 11, un circuit 13 de commande, de protection et d'adressage de la mémoire ; cette carte étant d'un type connu, on ne la décrira pas plus en détail, et l'on pourra se référer par exemple aux spécifications techniques du circuit EUROTECHNIQUE ET 1001 précité, parfaitement approprié à la mise en oeuvre de l'invention.

Le boîtier 20 comprend un connecteur 21 coopérant avec les contacts de la carte, de manière à échanger avec celle-ci des signaux de données ("Out"), de commande A, B et ST ("Strobe"), et lui appliquer des tensions V_{cc} d'alimentation (Vₛₛ correspondant au potentiel de masse) et Vₚₚ d'écriture (à chaque fois que l'on souhaite inscrire une position mémoire supplémentaire dans la PROM 12).

Le boîtier 20 comprend essentiellement un processeur 25 fonctionnant à partir d'une horloge temps réel 26 à quartz, et relié à l'afficheur 22, aux touches de fonction 23 et 24, à un circuit d'écriture 27 fournissant, sous contrôle du processeur 25, des impulsions de tension de programmation à la PROM 12 de la carte, ainsi qu'à un compteur intermédiaire 28 jouant le rôle de l'accumulateur précité et/ou de la mémoire de compte d'un solde débiteur d'unités de durée (pour la possibilité de fonctionnement "à découvert") ou de la mémoire tampon d'unités de durée (pour la possibilité de fonctionnement en "crédit permanent").

Des moyens de mise à l'heure de l'horloge sont également prévus pour l'ajustement de l'heure et la prise en compte des changements d'heure (été/hiver). Ces moyens sont par exemple commandés par les touches de fonction 23 et 24, le processeur ayant été préalablement placé dans une position de fonctionnement "mise à l'heure" (par exemple par appui simultané et/ou répété et/ou prolongé sur une ou plusieurs touches, à la manière des montres numériques).

Dans le cas du second mode de réalisation précité, il est prévu en outre une mémoire de compte 29 enregistrant, à chaque retrait de la carte, une information de comptabilisation comprenant le code du lieu d'utilisation et le nombre d'unités de durée consommées.

Cette mémoire 29 sera périodiquement déchargée dans un dispositif de transfert 30, illustré figure 4 : ce dispositif comprend un connecteur 31 permettant le couplage avec un boîtier (on peut notamment utiliser le même connecteur 21 que celui recevant les cartes), et un processeur 32 permettant de :
- transférer les informations de la mémoire 29 du boîtier dans une mémoire 33, organisée de façon similaire mais de plus grande capacité, et recevant de façon cumulative les données des mémoires de compte des boîtiers successifs connectés sur le dispositif de transfert,
- remettre à zéro cette mémoire de compte 29 (on peut notamment utiliser à cet effet une mémoire EEPROM), et
- restaurer le fonctionnement du boîtier après transfert des informations de compte.

## Revendications

1. Un système de comptabilisation du temps, notamment pour la comptabilisation des durées de stationnement payant, comprenant :
A) Une carte ou élément consommable (10), comprenant une mémoire électronique (12) comportant une pluralité de positions mémoire dont chaque position mémoire peut être inscrite individuellement et irréversiblement, chacune des positions mémoire représentant un crédit d'unités de durée alloué au détenteur de la carte, notamment un crédit d'unités de durée alloué en contrepartie d'un paiement préalable, ainsi que des moyens de couplage (11), accessibles de
B) Un boîtier essentiellement portatif (20) recevant la carte et comprenant :
- un circuit (26) d'horloge interne,
- des moyens (21) de couplage, propres à coopérer avec les moyens de couplage de la carte de manière à permettre l'établissement d'une liaison entre les circuits internes du boîtier et la mémoire de la carte introduite dans le boîtier, et
- un circuit d'écriture permettant l'inscription irréversible d'une position mémoire de la mémoire électronique de la carte introduite dans le boîtier, ce circuit étant périodiquement déclenché sous contrôle du circuit d'horloge de sorte que les inscriptions successives des positions mémoire de la carte introduite dans le boîtier correspondent à la consommation progressive, au fur et à mesure de l'écoulement du temps, du crédit d'unités de durée subsistant dans la carte.
caractérisé en ce que le boîtier ;
(20) comprend également des moyens de mémorisation temporaire d'unités de durée destinés à mémoriser des unités de durée complémentaires, activables à la place de ladite mémoire électronique (12) au cas où le crédit de durée subsistant dans la carte (10) introduite dans le boîtier (20) est inférieur à une quantité prédéterminée ;
en ce que lesdits moyens de mémorisation sont accédés par les circuits internes du boîtier de façon à y consommer progressivement au fur et à mesure de l'écoulement du temps, lesdites unités de durée complémentaires à la place de la consommation du crédit d'unités de durée contenu dans la carte,
et en ce que lesdites unités de durée complémentaires sont conservées dans lesdits moyens de mémorisation jusqu'à leur consommation totale selon la même logique de consommation que celle appliquée à la carte.

2. Le système de la revendication 1, dans lequel les moyens de mémorisation temporaire d'un crédit d'unités de durée comprennent :
- des moyens de comptage, formant accumulateur d'unités de durée,
- des moyens de chargement de cet accumulateur, activables de manière à inscrire tout ou partie des positions mémoire de la carte introduite dans le boîtier et, de façon concomitante, incrémenter d'un nombre correspondant d'unités les moyens de comptage, et des moyens sélecteurs, reliés d'une part aux moyens de couplage du boîtier et d'autre part aux moyens de comptage, coopérant avec le circuit d'écriture de sorte que le déclenchement périodique du circuit d'écriture provoque soit une décrémentation d'une unité des moyens de comptage, soit l'inscription d'une position mémoire d'une nouvelle carte introduite dans le boîtier en remplacement de la première,
de sorte que, au cas où la carte initiale ne contient qu'un crédit de durée inférieur à la durée de stationnement par l'usager, celui-ci puisse charger le compteur intermédiaire avec le solde subsistant dans cette carte et substituer à cette dernière une nouvelle carte, qui ne commencera à être progressivement consommée qu'après épuisement préalable du crédit d'unités de durée correspondant à ce solde.

3. Le système de la revendication 2, dans lequel les moyens de chargement de l'accumulateur sont activables manuellement sur commande de l'usager.

4. Le système de l'une des revendications 2 ou 3, dans lequel les moyens de chargement de l'accumulateur sont activables automatiquement sur commande du boîtier en fonction du crédit de durée subsistant dans la carte qui y est introduite.

5. Le système de l'une des revendications 1 à 4, dans lequel les moyens de mémorisation temporaire d'un crédit d'unités de durée comprennent :
- des moyens de comptage d'un solde débiteur d'unités de durée,
- des moyens pour déterminer périodiquement s'il subsiste dans la carte une position mémoire non inscrite et, dans l'affirmative, inscrire cette position mémoire ou, dans la négative, incrémenter les moyens de comptage, et
- des moyens pour détecter et signaler le franchissement par les moyens de comptage d'une valeur limite correspondant à un débit maximal autorisé d'unités de durée après consommation complète de la carte introduite dans le boîtier,
de sorte que l'usager ait la possibilité de stationner au-delà du crédit d'unités de durée correspondant à la carte introduite dans le boîtier.

6. Le système de la revendication 5, comprenant des moyens pour remettre à zéro les moyens de comptage par introduction d'une nouvelle carte dans le boîtier, avec inscription concomitante d'un nombre de positions mémoire de cette nouvelle carte correspondant à la valeur de compte atteinte par les moyens de comptage.

7. Le système de l'une des revendications 1 à 4, dans lequel les moyens de mémorisation temporaire d'un crédit d'unités de durée comprennent :
- des moyens de comptage réversible, formant tampon d'unités de durée,
- des moyens pour décrémenter périodiquement ce compteur sous contrôle du circuit d'horloge au fur et à mesure de l'écoulement du temps,
- des moyens pour déterminer, à chacune de ces décrémentations, s'il subsiste dans la carte une position mémoire non inscrite et, dans l'affirmative, inscrire cette position mémoire et incrémenter à nouveau le compteur de façon concomitante, et
- des moyens pour détecter et signaler le franchissement, dans le sens de la décrémentation, d'une valeur limite correspondant à un débit maximal autorisé d'unités de durée après consommation complète de la carte introduite dans le boîtier,
de sorte que l'usager ait la possibilité de stationner au-delà du crédit d'unités de durée correspondant à la carte introduite dans le boîtier.

8. Le système de la revendication 7, comprenant des moyens pour restaurer à leur valeur de compte originelle les moyens de comptage par introduction d'une nouvelle carte dans le boîtier et pour inscrire, de façon concomitante, un nombre de positions mémoire de cette nouvelle carte correspondant à la différence entre la valeur de compte originelle et la valeur de compte atteinte, dans le sens de la décrémentation, par les moyens de comptage.

9. Le système de l'une des revendications précédentes dans lequel la carte est une carte du type carte à microcircuit incorporant, outre la mémoire, des moyens (13) d'adressage et de commande de cette mémoire,

10. Le système de l'une des revendications précédentes, dans lequel le boîtier comprend en outre un dispositif d'autotest et des moyens d'affichage d'un résultat négatif de cet autotest.

11. Le système de la revendication 10, dans lequel l'affichage du résultat négatif de l'autotest est limité dans le temps à une durée prédéterminée de franchise de comptabilisation, de manière à signaler visuellement, par absence d'affichage, l'expiration de cette durée de franchise.

12. Le système de l'une des revendications précédentes, dans lequel :
1°) le boîtier comprend en outre :
- des moyens d'introduction par l'usager, après mise en place de la carte dans le boîtier, d'un paramètre représentatif du lieu d'utilisation du crédit d'unités de durée,
- une mémoire de compte (29), coopérant avec le circuit d'écriture et les moyens d'introduction, pour enregistrer à chaque retrait de la carte une information de comptabilisation comprenant le code du paramètre représentatif du lieu d'utilisation et le nombre associé de positions mémoire inscrites entre l'instant de la mise en place de la carte dans le boîtier et celui du retrait de celle-ci hors du boîtier,
de sorte que le boîtier puisse mémoriser, au fur et à mesure des utilisations successives, des informations permettant d'imputer ultérieurement les unités de durée consommées à un bénéficiaire déterminé lié au lieu où ces unités ont été consommées,
- des moyens de comptage, propres à incrémenter l'état d'au moins un compteur d'utilisations au fur et à mesure des utilisations successives du système, incrémentation(s) pouvant notamment être opérée(s) en fonction du nombre de positions mémoire inscrites dans les cartes successives introduites dans le boîtier, et/ou du nombre de cartes successives introduites dans le boîtier, et/ou du laps de temps écoulé depuis l'introduction de la première carte dans le boîtier,
- des moyens de blocage des circuits internes du boîtier, activés en réponse au dépassement d'une valeur de consigne prédéterminée par au moins l'un desdits compteurs d'utilisations,
de manière à rendre impossible toute utilisation du boîtier par son détenteur une fois ce dépassement réalisé, et obliger ainsi ce détenteur à demander périodiquement une restauration de son boîtier, en contrepartie d'un transfert à un dispositif externe des informations de comptabilisation contenues dans celui-ci,
- des moyens de visualisation de l'état, activé ou non, de ces moyens de blocage, et
- des moyens auxiliaires de couplage, accessibles de l'extérieur du boîtier, à ces moyens de mémorisation,
2°) le système comprend en outre :
C) Un dispositif de transfert (30) recevant le boîtier et comprenant :
- des moyens (31) de couplage, propres à coopérer avec les moyens auxiliaires de couplage du boîtier de manière à permettre l'établissement d'une liaison entre les circuits internes du dispositif de transfert et la mémoire de compte du boîtier,
- des moyens de lecture du contenu de la mémoire de compte du boîtier,
- une mémoire de compte (33) recevant de façon cumulative les contenus des mémoires de compte des différents boîtiers introduits successivement dans le dispositif de transfert,
- des moyens de remise à zéro de la mémoire de compte du boîtier après lecture et transfert de ses informations dans la mémoire du dispositif de transfert,
de manière à transférer les informations de compte d'une pluralité de boîtiers dans le dispositif de transfert et permettre ultérieurement la détermination pour chaque bénéficiaire d'une quote-part proportionnelle au nombre d'unités de durée consommées et la redistribution à chacun d'une fraction du produit des ventes des cartes fonction de cette quote-part,
- des moyens de libération des moyens de blocage du boîtier et de remise à zéro du(des) compteur(s) d'utilisations du boîtier, activés après lecture et transfert des informations de la mémoire de compte du boîtier dans la mémoire du dispositif de transfert,
de manière à restaurer le fonctionnement du boitier une fois que son détenteur en aura transféré les informations de la mémoire de compte dans la mémoire d'un dispositif de transfert.

13. Le système de la revendication 12, dans lequel la mémoire de compte est séparable du boîtier.

14. Le système de la revendication 12, dans lequel les moyens auxiliaires de couplage de la carte sont confondus avec les moyens principaux de couplage.

## Claims

1. A time accounting system, especially for accounting periods of charged parking, comprising:
A) a card or consumable element (10), comprising an electronic memory (12) including a plurality of memory locations, each memory location of which can be written to individually and irreversibly, each of the memory locations representing a credit of period units which is allocated to the holder of the card, in particular a credit of period units which is allocated in return for prior payment, as well as coupling means (11) accessible from outside the card, and
B) an essentially portable case (20) receiving the card and comprising:
- an internal clock circuit (26),
- coupling means (21) able to cooperate with the coupling means of the card so as to allow the establishment of a link between the internal circuits of the case and the memory of the card inserted into the case, and
- a writing circuit allowing the irreversible writing to a memory location of the electronic memory of the card inserted into the case, this circuit being triggered periodically under the control of the clock circuit so that the successive writings to the memory locations of the card inserted into the case correspond to the gradual consumption, as time elapses, of the credit of period units remaining in the card,
characterised in that the case (20) also comprises means for temporary storage of period units which are intended to store complementary period units and which can be activated instead of the said electronic memory (12) in the event that the period credit remaining in the card (10) inserted into the case (20) is less than a predetermined quantity;
in that the said storage means are accessed by the internal circuits of the case so as gradually, as time elapses, to consume therein the said complementary period units instead of consuming the credit of period units which is contained in the card, and in that the said complementary period units are retained in the said storage means until their total consumption according to the same consumption logic as that applied to the card.

2. The system of Claim 1, in which the means of temporary storage of a credit of period units comprise:
- counting means, forming an accumulator of period units,
- means of loading this accumulator, which can be activated in such a way as to write to all or some of the memory locations of the card inserted into the case and, in a concomitant manner, to increment the counting means by a corresponding number of units, and
- selector means connected, on the one hand, to the coupling means of the case and, on the other hand, to the counting means, cooperating with the writing circuit so that the periodic triggering of the writing circuit causes either a decrementation of the counting means by one unit, or the writing to a memory location of a new card inserted into the case as replacement for the first,
so that, in the event that the initial card contains merely a period credit which is less than the period of parking by the user, the latter can load the intermediate counter with the balance remaining in this card and substitute the latter by a new card, which will begin to be gradually consumed only after prior exhaustion of the credit of period units corresponding to this balance.

3. The system of Claim 2, in which the means of loading the accumulator can be activated manually under the control of the user.

4. The system of one of Claims 2 or 3, in which the means of loading the accumulator can be activated automatically under the control of the case as a function of the period credit remaining in the card inserted therein.

5. The system of one of Claims 1 to 4, in which the means of temporary storage of a credit of period units comprise:
- means of counting a debit balance of period units,
- means for periodically determining whether an unwritten memory location remains in the card and, if so, writing to this memory location or, if not, incrementing the counting means, and
- means for detecting and indicating the overstepping by the counting means of a limit value corresponding to a maximum authorised debit of period units after complete consumption of the card inserted into the case,
so that the user has the option to park beyond the credit of period units corresponding to the card inserted into the case.

6. The system of Claim 5, comprising means for resetting the counting means to zero by inserting a new card into the case, with concomitant writing to a number of memory locations of this new card corresponding to the account value reached by the counting means.

7. The system of one of Claims 1 to 4, in which the means of temporary storage of a credit of period units comprise:
- reversible counting means, forming a buffer of period units,
- means for periodically decrementing this counter under the control of the clock circuit as time elapses,
- means for determining, on each of these decrementations, whether an unwritten memory location remains in the card and, if so, writing to this memory location and again incrementing the counter in a concomitant manner, and
- means for detecting and indicating the overstepping, in the decrementation direction, of a limit value corresponding to a maximum authorised debit of period units after complete consumption of the card inserted into the case,
so that the user has the option to park beyond the credit of period units corresponding to the card inserted into the case.

8. The system of Claim 7, comprising means for restoring the counting means to their original account value by inserting a new card into the case and for writing, in a concomitant manner, to a number of memory locations of this new card corresponding to the difference between the original account value and the account value reached, in the decrementation direction, by the counting means.

9. The system of one of the preceding claims in which the card is a card of the microcircuit card type incorporating, apart from the memory, means (13) of addressing and controlling this memory.

10. The system of one of the preceding claims, in which the case furthermore comprises a self-test device and means of displaying a negative result of this self-test.

11. The system of Claim 10, in which the displaying of the negative result of the self-test is limited in time to a predetermined period of exemption of accounting, so as to indicate visually, through the absence of display, the expiry of this period of exemption.

12. The system of one of the preceding claims, in which:
1) the case furthermore comprises:
- means of insertion by the user, after positioning the card in the case, of a parameter representative of the place of use of the credit of period units,
- an account memory (29), cooperating with the writing circuit and the means of insertion, in order to record on each withdrawal of the card an accounting datum comprising the code of the parameter representative of the place of use and the associated number of memory locations written to between the instant of positioning the card in the case and that of its withdrawal from the case,
so that the case may store, in line with successive uses, data making it possible subsequently to charge the period units consumed to a specified beneficiary related to the place where these units were consumed,
- counting means able to increment the state of at least one counter of uses in line with the successive uses of the system, it being possible for these incrementation(s) to be effected in particular as a function of the number of memory locations written to in the successive cards inserted into the case, and/or of the number of successive cards inserted into the case and/or of the time span elapsed since the insertion of the first card into the case,
- means of inhibiting the internal circuits of the case, which are activated in response to the over-stepping of a predetermined reference value by at least one of the said usage counters,
so as to render impossible any usage of the case by its holder once this overstepping has occurred, and thus compelling the holder periodically to request a restoration of his case, in return for a transfer to an external device of the accounting data contained in the latter,
- means of displaying the state, activated or not, of these inhibiting means, and
- auxiliary means of coupling, accessible from outside the case, to these storage means,
2) the system furthermore comprises:
C) A transfer device (30) receiving the case and comprising:
- coupling means (31) able to cooperate with the auxiliary coupling means of the case so as to allow the establishment of a link between the internal circuits of the transfer device and the account memory of the case,
- means of reading the contents of the account memory of the case,
- an account memory (33) receiving in a cumulative manner the contents of the account memories of the various cases inserted successively into the transfer device,
- means of resetting the account memory of the case to zero after reading and transferring its data into the memory of the transfer device,
so as to transfer the account data from a plurality of cases into the transfer device and subsequently allow the determination, for each beneficiary, of a share proportional to the number of period units consumed and the redistribution to each of a fraction of the product of the sales of the cards as a function of this share,
- means of releasing the means of inhibiting the case and of resetting the counter(s) of uses of the case to zero, which are activated after reading and transferring data from the account memory of the case into the memory of the transfer device,
so as to restore the operation of the case once its holder has transferred the data from the account memory into the memory of a transfer device.

13. The system of Claim 12, in which the account memory can be separated from the case.

14. The system of Claim 12, in which the auxiliary coupling means of the card are the same as the main coupling means.

## Patentansprüche

1. Vorrichtung zum Verwalten von Zeiteinheiten, insbesondere beim gebührenpflichtigen Parken, welche folgendes enthält:
A) eine Karte oder ein Verbrauchselement (10) mit einem elektronischen Speicher (12), der eine Vielzahl an Speicherpositionen enthält, wobei jede Speicherposition individuell und unumkehrbar beschriftet werden kann, und einen Zeiteinheitenkredit darstellt, der dem Karteninhaber zugeteilt wird, insbesondere ein Zeiteinheitenkredit, der gegen Vorauszahlung zugeteilt wird sowie Kopplungsmittel (11), die von außerhalb der Karte zugänglich sind und
B) ein im wesentlichen tragbares Gehäuse (20), das die Karte aufnimmt und folgendes enthält:
- einen inneren Uhrwerkschaltkreis (26),
- Kopplungsmittel (21), die dazu geeignet sind, mit den Kopplungsmitteln der Karte zusammenzuwirken, um eine Verbindung zwischen den Schaltkreisen im Inneren des Gehäuses und die Speichereinheit der in das Gehäuse eingeführten Karte herzustellen und
- einen Beschriftungsschaltkreis, der das unumkehrbare Beschriften einer Speicherposition des elektronischen Speichers der in das Gehäuse eingeführten Karte bewirkt, wobei dieser Schaltkreis periodisch unter Kontrolle des Uhrwerkschaltkreises aktiviert wird, so daß die aufeinanderfolgenden Beschriftungen der Speicherpositionen der in das Gehäuse eingeführten Karte mit dem fortschreitenden zeitlichen Verbrauch des auf der Karte gespeicherten Zeiteinheitenkredits übereinstimmen,
dadurch gekennzeichnet, daß das Gehäuse (20) auch Mittel zum zeitlich begrenzten Speichern von Zeiteinheiten besitzt, um zusätzliche Zeiteinheiten zu speichern, welche an der Stelle der elektronischen Speichereinheit (12) aktiviert werden können für den Fall, daß der auf der im Gehäuse (20) eingeführten Karte (10) gespeicherte Zeiteinheitenkredit kleiner als eine vorgegebene Größe ist,
dadurch gekennzeichnet, daß die Speichermittel für die internen Schaltkreise des Gehäuses derart zugänglich sind, daß dort nach und nach die zusätzlichen Zeiteinheiten anstelle des in der Karte gespeicherten Zeiteinheitenkredits verbraucht werden,
und dadurch gekennzeichnet, daß die zusätzlichen Zeiteinheiten in dem Speichermittel so lange gespeichert bleiben, bis sie vollständig gemäß derselben Logik aufgebraucht sind, die für den auf der Karte gespeicherten Zeiteinheitenkredit gilt.

2. Vorrichtung gemäß Anspruch 1, wobei die zeitlich begrenzten Speichermittel eines Zeiteinheitenkredits folgendes enthalten:
- Zählmittel, die als Zeiteinheitenakkumulator wirken,
- Mittel, um diesen Akkumulator zu laden, die so aktiviert werden können, daß die Speicherpositionen der in das Gehäuse eingeführten Karte in ihrer Gesamtheit oder teilweise beschriftet und gleichzeitig die Zählmittel um eine entsprechende Zahl von Zeiteinheiten inkrementiert werden und
- Auswahlmittel, die einerseits mit den Kopplungsmitteln des Gehäuses und andererseits mit den Zählmitteln verbunden sind, welche derart mit dem Beschriftungsschaltkreis zusammenwirken, daß das periodische Aktivieren des Beschriftungsschaltkreises entweder die Reduzierung der Zählmittel um eine Einheit oder die Beschriftung einer Speicherposition einer neuen Karte, die als Ersatz für die alte in das Gehäuse eingeführt wird, bewirkt,
derart, daß wenn die erste Karte nur noch einen Zeiteinheitenkredit enthält, der kleiner als die vom Verbraucher beanspruchte Parkdauer ist, dieser den Zwischenzähler mit dem auf der ersten Karte verbleibenden Saldo laden kann und diese Karte durch eine neue ersetzen kann, deren allmählicher Verbrauch erst dann einsetzt, wenn der diesem Saldo entsprechende Zeiteinheitenkredit vollständig aufgebraucht ist.

3. Vorrichtung gemäß Anspruch 2, wobei die Mittel zum Laden des Akkumulators durch den Verbraucher nach seinem Willen manuell betätigt werden können.

4. Vorrichtung gemäß einem der Ansprüche 2 oder 3, wobei die Mittel zum Laden des Akkumulators automatisch auf Befehl des Gehäuses betätigt werden, in Abhängigkeit des auf der eingeführten Karte verbleibenden Zeiteinheitenkredits.

5. Vorrichtung gemäß einem der Ansprüche 1 bis 4, wobei die zeitlich begrenzten Speichermittel für einen Zeiteinheitenkredit folgendes enthalten:
- Zählmittel für einen Zeiteinheitensollbetrag,
- Mittel, um periodisch festzustellen, ob auf der Karte eine noch unbeschriftete Speicherposition vorhanden ist und, falls dies zutrifft, diese zu beschriften oder, falls dies nicht der Fall ist, die Zählmittel zu inkrementieren, und
- Mittel, um das Überschreiten eines Grenzwertes durch die Zählmittel festzustellen und anzuzeigen, entsprechend einer, nach dem vollständigen Verbrauch der Zeiteinheiten, die auf der in das Gehäuse eingeführten Karte gespeichert sind, maximal zugelassenen Anzahl von Zeiteinheiten,
derart, daß der Verbraucher die Möglichkeit hat länger zu parken, als es der Zeiteinheitenkredit zulassen würde, der auf der in das Gehäuse eingeführten Karte gespeichert ist.

6. Vorrichtung gemäß Anspruch 5, wobei Mittel vorhanden sind, um die Zählmittel durch Einführen einer neuen Karte in das Gehäuse auf Null zurückzustellen, mit gleichzeitiger Beschriftung einer Anzahl an Speicherpositionen dieser neuen Karte entsprechend dem durch die Zählmittel erreichten Wert.

7. Vorrichtung gemäß einem der Ansprüche 1 bis 4, wobei die zeitlich begrenzten Speichermittel für einen Zeiteinheitenkredit folgendes enthalten:
- umkehrbare Zählmittel, die einen Zeiteinheitenpuffer bilden,
- Mittel zum periodischen Dekrementieren dieses Zählwerks, gesteuert durch den Uhrwerkschaltkreis gemäß dem Zeitablauf,
- Mittel, um bei jeder solchen Dekrementierung festzustellen, ob auf der Karte eine noch unbeschriftete Speicherposition vorhanden ist und, falls dies zutrifft, diese zu beschriften und gleichzeitig den Zähler wieder zu inkrementieren und
- Mittel, um während der Dekrementierung das Überschreiten eines Grenzwertes festzustellen und anzuzeigen, entsprechend einer, nach dem vollständigen Verbrauch der Zeiteinheiten, die auf der in das Gehäuse eingeführten Karte gespeichert sind, maximal zugelassenen Anzahl von Zeiteinheiten,
derart, daß der Verbraucher die Möglichkeit hat, länger zu parken, als es der Zeiteinheitenkredit zulassen würde, der auf der in das Gehäuse eingeführten Karte gespeichert ist.

8. Vorrichtung gemäß Anspruch 7, wobei Mittel vorhanden sind, die das Zurückstellen der Zählmittel auf ihren ursprünglichen Wert durch Einführen einer neuen Karte in das Gehäuse und gleichzeitiger Beschriftung einer Anzahl von Speicherpositionen dieser neuen Karte durch die Zählmittel, entsprechend der Differenz zwischen dem ursprünglichen und dem erreichten Zählerwert, in Richtung der Dekrementierung ermöglichen.

9. Vorrichtung gemäß einem der vorhergehenden Ansprüche, wobei es sich bei der Karte um eine Mikrochipkarte handelt, welche, neben dem Speicher auch Addressierungs- und Befehlsmittel (13) dieses Speichers enthält.

10. Vorrichtung gemäß einem der vorhergehenden Ansprüche, wobei das Gehäuse zusätzlich eine Selbstprüfvorrichtung enthält und Mittel zum Anzeigen eines negativen Ergebnisses dieser Selbstprüfung.

11. Vorrichtung gemäß Anspruch 10, wobei die Anzeige des negativen Ergebnisses der Selbstprüfung zeitlich auf einen vorher festgelegten Zählerfreibetrag an Zeiteinheiten begrenzt ist, um durch die fehlende Anzeige den Ablauf dieser zugestandenen freien Zeitdauer anzuzeigen.

12. Vorrichtung gemäß einem der vorhergehenden Ansprüche, wobei:
1°) das Gehäuse folgendes zusätzlich enthält:
- Mittel, die es dem Verbraucher ermöglichen, nach Einführen der Karte in das Gehäuse, einen Parameter einzugeben, der für den Ort repräsentativ ist, an welchem der Zeiteinheitenkredit verbraucht wird,
- ein Zählspeicher (29), der mit dem Beschriftungskreislauf und den Eingabemitteln zusammenwirkt, um bei jedem Herausziehen der Karte eine Buchungsinformation zu speichern, welche den Code des für den Verbrauchsort repräsentativen Parameters enthält sowie die damit zusammenhängende Anzahl an Speicherpositionen, die zwischen dem Einführen und dem Herausziehen der Karte vom Gehäuse beschriftet wurden,
derart, daß das Gehäuse im Verlauf aufeinanderfolgender Anwendungen Daten speichern kann, die das nachträgliche Anrechnen der verbrauchten Zeiteinheiten einem bestimmten, mit dem Verbrauchsort dieser Zeiteinheiten verbundenen Nutznießers, ermöglichen,
- Zählmittel, die wenigstens den Zustand eines Verbrauchszählers im Verlauf der aufeinanderfolgenden Vorrichtungsanwendungen inkrementieren können, wobei diese Inkrementierung(en) insbesondere in Abhängigkeit der auf den nacheinander in das Gehäuse eingeführten Karten beschrifteten Speicherpositionen durchgeführt werden kann (können), und/oder in Abhängigkeit der Anzahl nacheinander in das Gehäuse eingeführter Karten, und/oder in Abhängigkeit der Zeit, die seit dem Einführen der ersten Karte in das Gehäuse vergangen ist,
- Sperrmittel für die inneren Gehäusekreisläufe, welche beim Überschreiten eines vorgegebenen Referenzwertes aktiviert werden durch wenigstens eines der besagten Anwendungszählwerke,
derart, daß der Inhaber das Gehäuse nach dieser Überschreitung nicht mehr anwenden kann und somit gezwungen wird, eine Rückstellung seines Gehäuses zu beantragen, im Gegenzug für die Übermittlung der in diesem Gehäuse enthaltenen Buchhaltungsdaten an eine externe Vorrichtung,
- Mittel, um sichtbar zu machen, ob diese Sperrmittel aktiviert sind oder nicht und
- behelfsmäßige Kopplungsmittel, die für diese Speichermittel von außerhalb des Gehäuses zugänglich sind.
2°) Das System enthält außerdem:
C) eine Übertragungsvorrichtung (30), die das Gehäuse aufnehmen kann und die folgendes enthält:
- Kopplungsmittel (30), die mit den behelfsmäßigen Kopplungsmitteln des Gehäuses zusammenwirken können, um eine Verbindung zwischen den inneren Kreisläufen der Übertragungsvorrichtung und dem Zählspeicherwerk des Gehäuses herzustellen,
- Mittel zum Ablesen des Gehäusezählspeicherwerks,
- ein Speicher (33), der kummulativ die Inhalte der Zählspeicherwerke der in die Übertragungsvorrichtung nacheinander eingeführten verschiedenen Gehäuse aufnimmt,
- Mittel, um das Gehäusezählspeicherwerk nach Ablesen und Übertragung der dort enthaltenen Daten in den Speicher der Übertragungsvorrichtung auf Null zurückzustellen,
um die Zählerdaten einer Mehrzahl von Gehäusen in die Übertragungsvorrichtung einzugeben und nachträglich das Feststellen für jeden Nutznießer eines der verbrauchten Anzahl von Zeiteinheiten entsprechenden Anteils zu ermöglichen sowie einem jeden Nutznießer einen Bruchteil des Verkaufserlöses der Karten, entsprechend diesem Anteil, zukommen zu lassen,
- Mittel, um die Gehäusesperren aufzuheben, sowie um das (die) Zählwerk(e) auf Null zurückzustellen, welche nach dem Ablesen und dem Übertragen der Daten vom Gehäusezählspeicherwerk in den Speicher der Übertragungsvorrichtung, aktiviert werden,
um die Gehäusefunktion wiederherzustellen, nachdem der Inhaber die darin gespeicherten Zählwerkdaten in den Speicher der Übertragungsvorrichtung übertragen hat.

13. Vorrichtung gemäß Anspruch 12, wobei der Zählwerkspeicher vom Gehäuse getrennt werden kann.

14. Vorrichtung gemäß Anspruch 12, wobei die behelfsmäßigen Kopplungsmittel der Karte dieselben sind wie die Hauptkopplungsmittel.
